# EUROPEAN PATENT APPLICATION

(11) **EP 4 447 303 A1**
(43) Date of publication of application: **16.10.2024**
(21) Application number: 22903610.8
(22) Date of filing: 09.12.2022
(51) Int. Cl.: H02M 3/335

(54) **BIDIRECTIONAL POWER SUPPLY, AND METHOD FOR CONTROLLING BIDIRECTIONAL POWER SUPPLY**

(30) Priority: 09.12.2021 CN 202111499028
(71) Applicant: Guangdong Midea White Home Appliance Technology Innovation Center Co., Ltd., Foshan, Guangdong 528311 (CN); Midea Group Co., Ltd., Foshan, Guangdong 528311 (CN)
(72) Inventor: HU, Shuchang, Foshan, Guangdong 528311 (CN); CHEN, Peng, Foshan, Guangdong 528311 (CN)
(74) Representative: Ran, Handong
(86) International application number: PCT/CN2022/138011
(87) International publication number: WO 2023/104193

(57) **Abstract**

The present application belongs to the technical field of power electronics. Disclosed are a bidirectional power supply, and a method for controlling a bidirectional power supply. The bidirectional power supply comprises a bidirectional alternating-current/direct-current conversion circuit, a bidirectional voltage transformer circuit and a control circuit, wherein the bidirectional alternating-current/direct-current conversion circuit is respectively connected to an alternating-current source and the bidirectional voltage transformer circuit; the bidirectional voltage transformer circuit is connected to a voltage bus of a target device; the control circuit is connected to the bidirectional voltage transformer circuit, and is used for acquiring electrical parameters at the connection position of the bidirectional voltage transformer circuit and the voltage bus, and controlling the electric transmission direction of the bidirectional voltage transformer circuit on the basis of the electrical parameters. The bidirectional power supply provided in the present application can transmit electric energy generated by a target device in a power generation working state into an alternating-current source, and there is no need to configure a discharge resistor, a heat dissipation fan, etc., for the target device, such that the production cost of the target device can be reduced, the size of the target device is reduced, etc.

## Description

The present application claims priority to Chinese Patent Application No. 202111499028.0, filed on December 9, 2021, and entitled "BIDIRECTIONAL POWER SUPPLY, AND METHOD FOR CONTROLLING BIDIRECTIONAL POWER SUPPLY", the entire content of which is herein incorporated by reference.

### TECHNICAL FIELD

The present application relates to the field of power electronics technologies, and in particular, relates to a bidirectional power supply and a method for controlling a bidirectional power supply.

### BACKGROUND

In industrial production, some equipment can be driven by a motor to drive an actuator to work, thereby achieving automated production. However, under some specific situations, the actuator may move in reverse under the action of gravity and other external forces, thereby driving the motor to rotate, such that the motor will be in the electricity-generating working state.

For example, selective compliance assembly robot arm (SCARA) robots may frequently lift and lower heavy objects during working. When a SCARA robot lifts a heavy object using a robot arm, the robot arm is driven by a motor to lift the heavy object. When the SCARA robot places the heavy object downwardly using the robot arm, the robot arm may move downwardly under the action of gravity and drive the motor to rotate, such that the motor is in an electricity-generating working state, and outputs electrical energy.

In the related art, a large discharge resistor is configured in the equipment to consume the electrical energy generated by the motor in the electricity-generating working state. Since the discharge resistor converts the electrical energy into thermal energy, it is also necessary to configure a cooling fan for the discharge resistor to dissipate heat for the discharge resistor. Alternatively, a battery may be configured for the equipment to store the electrical energy generated by the motor in the electricity-generating working state. However, no matter whether the discharge resistor and cooling fan are configured for the equipment or the battery is configured for the equipment, the production cost, volume, and the like of the equipment will undoubtedly increase.

### SUMMARY

The present application provides a bidirectional power supply and a method for controlling a bidirectional power supply, capable of reducing the production cost, volume, and the like of the equipment. The corresponding technical solutions are as follows.

In an aspect, a bidirectional power supply is provided. The bidirectional power supply includes a bidirectional AC/DC converter circuit, a bidirectional transformer circuit, and a control circuit; wherein
the bidirectional AC/DC converter circuit is connected to an AC source and the bidirectional transformer circuit;
the bidirectional transformer circuit is connected to a voltage bus of target equipment; and
the control circuit is connected to the bidirectional transformer circuit, and is configured to acquire an electrical parameter at a connection between the bidirectional transformer circuit and the voltage bus, and control an electrical transmission direction of the bidirectional transformer circuit based on the electrical parameter.

Optionally, the electrical parameter is a voltage value; and
the control circuit is configured to:
in a case that the electrical transmission direction of the bidirectional transformer circuit is from a first electrical transmission interface to a second electrical transmission interface, switch, if a voltage value at the second electrical transmission interface is greater than or equal to a first voltage threshold, the electrical transmission direction of the bidirectional transformer circuit to be from the second electrical transmission interface to the first electrical transmission interface, wherein the first electrical transmission interface is an interface of the bidirectional transformer circuit that is connected to the bidirectional AC/DC converter circuit, and the second electrical transmission interface is an interface of the bidirectional transformer circuit that is connected to the voltage bus of the target equipment; and
in a case that the electrical transmission direction of the bidirectional transformer circuit is from the second electrical transmission interface to the first electrical transmission interface, switch, if the voltage value at the second electrical transmission interface is less than or equal to a second voltage threshold, the electrical transmission direction of the bidirectional transformer circuit to be from the first electrical transmission interface to the second electrical transmission interface, wherein the first voltage threshold is greater than the second voltage threshold.

Optionally, the second voltage threshold is a working voltage of the target equipment.

Optionally, the electrical parameter is a direction of current; and
the control circuit is configured to:
in a case that the electrical transmission direction of the bidirectional transformer circuit is from a first electrical transmission interface to a second electrical transmission interface, switch, if a direction of current at the second electrical transmission interface is opposite to a preset direction of current, the electrical transmission direction to be from the second electrical transmission interface to the first electrical transmission interface, wherein the first electrical transmission interface is an interface of the bidirectional transformer circuit that is connected to the bidirectional AC/DC converter circuit, and the second electrical transmission interface is an interface of the bidirectional transformer circuit that is connected to the voltage bus of the target equipment; and
in a case that the electrical transmission direction of the bidirectional transformer circuit is from the second electrical transmission interface to the first electrical transmission interface, switch, if the direction of current at the second electrical transmission interface is the same as the preset direction of current, the electrical transmission direction to be from the first electrical transmission interface to the second electrical transmission interface.

Optionally, the control circuit includes a detector and a processor; wherein
the detector is configured to detect the electrical parameter at the connection between the bidirectional transformer circuit and the voltage bus;
the processor is configured to acquire the electrical parameter detected by the detector and control the electrical transmission direction of the bidirectional transformer circuit based on the electrical parameter.

Optionally, the target equipment is configured with a mechanical arm driven by a motor.

Optionally, the bidirectional AC/DC converter circuit is a bidirectional power factor correction (PFC) circuit.

Optionally, the bidirectional transformer circuit is a bidirectional dual active bridge (DAB) circuit.

In another aspect, a method for controlling a bidirectional power supply is provided. The bidirectional power supply includes a bidirectional AC/DC converter circuit, a bidirectional transformer circuit, and a control circuit; wherein
the bidirectional AC/DC converter circuit is connected to an AC source and the bidirectional transformer circuit; the bidirectional transformer circuit is connected to a voltage bus of target equipment; and the control circuit is connected to the bidirectional transformer circuit; and
the method includes: acquiring, by the control circuit an electrical parameter at a connection between the bidirectional transformer circuit and the voltage bus, and controlling, by the control circuit, an electrical transmission direction of the bidirectional transformer circuit based on the electrical parameter.

Optionally, the electrical parameter is a voltage value; and
the controlling the electrical transmission direction of the bidirectional transformer circuit based on the electrical parameter includes:
in a case that the electrical transmission direction of the bidirectional transformer circuit is from a first electrical transmission interface to a second electrical transmission interface, switching, if the control circuit determines that a voltage value at the second electrical transmission interface is greater than or equal to a first voltage threshold, the electrical transmission direction of the bidirectional transformer circuit to be from the second electrical transmission interface to the first electrical transmission interface, wherein the first electrical transmission interface is an interface of the bidirectional transformer circuit that is connected to the bidirectional AC/DC converter circuit, and the second electrical transmission interface is an interface of the bidirectional transformer circuit that is connected to the voltage bus of the target equipment; and
in a case that the electrical transmission direction of the bidirectional transformer circuit is from the second electrical transmission interface to the first electrical transmission interface, switching, if the control circuit determines that the voltage value at the second electrical transmission interface is less than or equal to a second voltage threshold, the electrical transmission direction of the bidirectional transformer circuit to be from the first electrical transmission interface to the second electrical transmission interface, wherein the first voltage threshold is greater than the second voltage threshold.

Optionally, the second voltage threshold is a working voltage of the target equipment.

Optionally, the electrical parameter is a direction of current; and
the controlling the electrical transmission direction of the bidirectional transformer circuit based on the electrical parameter includes:
in a case that the electrical transmission direction of the bidirectional transformer circuit is from a first electrical transmission interface to a second electrical transmission interface, switching, if the control circuit determines that a direction of current at the second electrical transmission interface is opposite to a preset direction of current, the electrical transmission direction to be from the second electrical transmission interface to the first electrical transmission interface, wherein the first electrical transmission interface is an interface of the bidirectional transformer circuit that is connected to the bidirectional AC/DC converter circuit, and the second electrical transmission interface is an interface of the bidirectional transformer circuit that is connected to the voltage bus of the target equipment; and
in a case that the electrical transmission direction of the bidirectional transformer circuit is from the second electrical transmission interface to the first electrical transmission interface, switching, if the control circuit determines that the direction of current at the second electrical transmission interface is the same as the preset direction of current, the electrical transmission direction to be from the first electrical transmission interface to the second electrical transmission interface.

Optionally, the control circuit includes a detector and a processor; wherein
the acquiring the electrical parameter at the connection between the bidirectional transformer circuit and the voltage bus includes:
detecting, by the detector, the electrical parameter at the connection between the bidirectional transformer circuit and the voltage bus; and
the controlling the electrical transmission direction of the bidirectional transformer circuit based on the electrical parameter includes:
acquiring, by the processor, the electrical parameter detected by the detector and controlling, by the processor, the electrical transmission direction of the bidirectional transformer circuit based on the electrical parameter.

The technical solutions provided by embodiments of the present application achieve the following beneficial effects.

In the embodiments of the present application, the bidirectional power supply includes a bidirectional AC/DC converter circuit, a bidirectional transformer circuit, and a control circuit. The control circuit can control the electrical transmission direction of the bidirectional transformer circuit based on the electrical parameter at the connection between the bidirectional transformer circuit and the voltage bus of the target equipment. Since the electrical parameter at the connection is directly related to the working state of the motor of the target equipment, by detecting the electrical parameter to control the electric transmission direction of the bidirectional transformer circuit, when the motor of the target equipment is in the electricity-generating working state, the direct current generated by the motor can be transmitted through the bidirectional transformer circuit to the bidirectional AC/DC converter circuit, and then the bidirectional AC/DC converter circuit converts the incoming direct current into an alternating current to be transmitted to the AC source. In this way, in the present application, there is no need to configure a discharge resistor and a cooling fan, or the like for the target equipment, which can reduce the production cost, volume, and the like of the target equipment.

### BRIEF DESCRIPTION OF DRAWINGS

For clearer descriptions of the technical solutions in the embodiments of the present application, the following briefly introduces the accompanying drawings required for describing the embodiments. The accompanying drawings in the following descriptions show merely some embodiments of the present application, and persons of ordinary skill in the art may still derive other drawings from these accompanying drawings without creative effort.
FIG. 1 is a schematic diagram of a bidirectional power supply according to some embodiments of the present application;
FIG. 2 is a schematic diagram of a bidirectional power supply according to some embodiments of the present application; and
FIG. 3 is a schematic diagram of a circuit of a bidirectional power supply according to some embodiments of the present application.

Reference numerals in the drawings:
1: bidirectional AC/DC converter circuit; 2: bidirectional transformer circuit; 3: control circuit;
11: DC interface; 12: AC interface;
21: first electrical transmission interface; 22: second electrical transmission interface; 23: control interface.

### DETAILED DESCRIPTION

To make the objectives, technical solutions, and advantages of the present application clearer, the embodiments of the present application will be further described in detail below with reference to the accompanying drawings.

In industrial production, some equipment can be driven by the motor to drive the actuator to work, thereby achieving automated production. However, under some specific situations, the actuator may move in reverse under the action of gravity and other external forces, thereby driving the motor to rotate, such that the motor will be in the electricity-generating working state. As a result, the motor has two working states, i.e., an electricity-consuming working state and an electricity-generating working state. In the related art, a technician may configure a larger discharge resistor in the equipment to consume the electrical energy generated by the motor in the electricity-generating working state. However, since the discharge resistor converts the electrical energy into thermal energy, it is also necessary to configure a cooling fan for the discharge resistor to dissipate heat for the discharge resistor. In this way, not only the discharge resistor but also the cooling fan are added for the equipment. As a result, the production and use costs of the equipment increase, the volume of the equipment increases, and the electrical energy generated by the motor cannot be fully utilized. In another possible situation, the technician may configure a battery for the equipment to store the electric energy generated by the motor in the electricity-generating working state, but this will also cause the production and use costs and the volume of the equipment to increase.

The present application provides a bidirectional power supply. The bidirectional power supply can be connected to an alternating current (AC) source (e.g., power grid) and can supply power to target equipment. The motor in the target equipment has an electricity-consuming working state and an electricity-generating working state. When the motor of the target equipment is in the electricity-consuming working state, the bidirectional power supply can convert an AC from the power grid to a direct current (DC), so as to supply power to the motor. When the motor of the target equipment is in the electricity-generating working state, the bidirectional power supply can convert the DC generated by the motor into the AC, and transmit the AC into an AC source connected to the bidirectional power supply. The present discourse can reduce the production and use costs of the target equipment, improve the utilization rate of energy, and the like.

Hereinafter, the bidirectional power supply provided in the present application will be described.

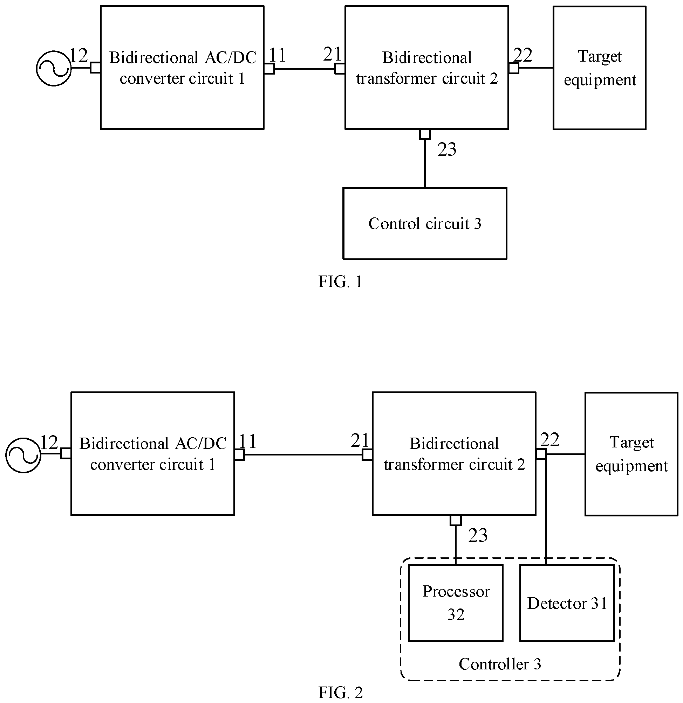

FIG. 1 shows a bidirectional power supply according to some embodiments of the present discourse. The bidirectional power supply includes:
a bidirectional AC/DC converter circuit 1, a bidirectional transformer circuit 2, and a control circuit 3. The bidirectional AC/DC converter circuit 1 is connected to an AC source and the bidirectional transformer circuit 2. The bidirectional transformer circuit 2 is connected to a voltage bus of target equipment. The control circuit 3 is connected to the bidirectional transformer circuit 2, and is configured to acquire an electrical parameter at a connection between the bidirectional transformer circuit 2 and the voltage bus, and control an electrical transmission direction of the bidirectional transformer circuit 2 based on the electrical parameter. The electrical parameter is a voltage value or a current direction.

As shown in FIG. 1, the bidirectional power supply consists of a bidirectional AC/DC converter circuit 1, a bidirectional transformer circuit 2, and a control circuit 3.

The bidirectional AC/DC converter circuit 1 includes a DC interface 11 and an AC interface 12, and the bidirectional AC/DC converter circuit 1 may, under the control of the control circuit 3, convert an alternating current accessed by the AC interface 12 to a direct current and output the direct current through the DC interface 11, or convert a direct current accessed by the DC interface 11 to an alternating current and output the alternating current through the AC interface 12. The AC source connected to the AC interface 12 may be a power grid.

The bidirectional transformer circuit 2 includes a first electrical transmission interface 21 and a second electrical transmission interface 22, and the bidirectional transformer circuit 2 may, under the control of the control circuit 3, transform the incoming current from the first electrical transmission interface 21 and transmit the current to the second electrical transmission interface 22, or transform the incoming current from the second electrical transmission interface 22 and transmit the current to the first electrical transmission interface 21. The first electrical transmission interface 21 of the bidirectional transformer circuit 2 is connected to the DC interface 11 of the bidirectional AC/DC converter circuit 1, and the second electrical transmission interface 22 of the bidirectional transformer circuit 2 is connected to the voltage bus of the target equipment. In this way, when the motor of the target equipment is in the electricity-consuming working state, the bidirectional transformer circuit 2 may be controlled to step down the incoming DC from the DC interface 11 (to a normal working voltage of the target equipment) and transmit it to the voltage bus of the target equipment through the second electrical transmission interface 22 to drive the motor of the target equipment to rotate. In turn, when the motor of the target equipment is in the electricity-generating working state, the bidirectional transformer circuit 2 may be controlled to boost the incoming direct current from the voltage bus of the target equipment and transmit it to the DC interface of the bidirectional AC/DC converter circuit 1 through the first electrical transmission interface 21, and then convert the incoming direct current to the alternating current through the bidirectional AC/DC converter circuit 1, and transmit it to the power grid through the AC interface 12.

The control circuit 3 is connected to the control interface 13 (not shown in FIG. 1) of the bidirectional AC/DC converter circuit 1 and connected to the control interface 23 of the bidirectional transformer circuit 2, to achieve the control over the bidirectional AC/DC converter circuit 1 and the bidirectional transformer circuit 2.

The control circuit 3 may control the electrical transmission direction of the bidirectional power supply by detecting the working state of the motor of the target equipment. When the motor of the target equipment is in the electricity-consuming working state, the bidirectional power supply needs to supply power to the target equipment, and the voltage value at the connection between the bidirectional transformer circuit 2 and the voltage bus of the target equipment (i.e., the second electrical transmission interface 22) is the normal working voltage of the target equipment. When the target equipment is in the electricity-generating working state, the current generated by the motor flows in a reverse direction through the voltage bus of the target equipment to the second electrical transmission interface 22 of the bidirectional transformer circuit 2. In this way, the direction of current at the second electrical transmission interface 22 is opposite to the direction of current of the target equipment in the electricity-consuming working state, and the voltage value at the second electrical transmission interface 22 will be raised. Thus, the control circuit 3 can determine the working state of the target equipment by acquiring the electrical parameter (voltage value or direction of current) at the second electrical transmission interface 22, and thereby control the bidirectional AC/DC converter circuit 1 and the bidirectional transformer circuit 2 based on the working state of the target equipment.

It should be noted that the electricity-consuming working state of the motor may include a rotating state of the motor after being powered on and may also include a standby state of the motor. When the actuator of the target equipment drives the motor to rotate, the motor can generate electricity outwardly, and the motor is in the electricity-generating working state. The target equipment is configured with a mechanical arm, which may be driven by the motor. For example, the target equipment is a selective compliance assembly robot arm (SCARA) robot, the corresponding actuator is a mechanical arm of the SCARA robot, and the motor that determines the mechanical arm of the SCARA robot may be a servo motor.

It should be noted that a plurality of motors may be provided in the mechanical arm of the target equipment. The plurality of motors may constitute a motor system. In the motor system, there may be both a motor in the electricity-consuming working state and a motor in the electricity-generating working state. Therefore, a power distribution apparatus may be provided in the motor system, and the power distribution apparatus may supply the electrical energy generated by the motor in the electricity-generating working state to the motor in the electricity-consuming working state. When the motor system as a whole consumes electricity, i.e., when the electrical energy generated by the motor in the electricity-generating working state is less than the electrical energy to be consumed by the motor in the electricity-consuming working state in the motor system, it may be considered that the motor system is in the electricity-consuming working state. When the motor system as a whole generates electricity outwardly, i.e., when the electrical energy generated by the motor in the electricity-generating working state is greater than the electrical energy to be consumed by the motor in the electricity-consuming working state in the motor system, it may be considered that the motor system is in the electricity-generating working state. When a plurality of motors are provided in the target equipment, as for the motor of the target equipment being in the electricity-consuming working state or the electricity-generating working state described above, it may also be that the motor system of the target equipment is in the electricity-consuming working state or the electricity-generating working state.

As can be seen, the bidirectional power supply provided in the present application can supply power to the target equipment when the motor of the target equipment is in the electricity-consuming working state, and can switch the electrical transmission direction in the bidirectional power supply when the motor of the target equipment is in the electricity-generating working state, so as to transmit the electrical energy generated by the motor into the power grid. In this way, there is no need to configure a discharge resistor for the target equipment, let alone a cooling fan for the discharge resistor, which can reduce the production and use costs of the target equipment to a certain extent, reduce the volume of the target equipment, and improve the utilization rate of energy.

In a possible implementation, when the control circuit 3 determines the working state of the motor and controls the electrical transmission direction of the bidirectional transformer circuit 2 based on the voltage value at the connection between the bidirectional transformer circuit 2 and the voltage bus of the target equipment, further processing is as follows.

In the case that the electrical transmission direction of the bidirectional transformer circuit 2 is from the first electrical transmission interface 21 to the second electrical transmission interface 22, if the voltage value at the second electrical transmission interface 22 is greater than or equal to a first voltage threshold, the electrical transmission direction of the bidirectional transformer circuit 2 is switched to be from the second electrical transmission interface 22 to the first electrical transmission interface 21. In the case that the electrical transmission direction of the bidirectional transformer circuit 2 is from the second electrical transmission interface 22 to the first electrical transmission interface 21, if the voltage value at the second electrical transmission interface 22 is less than or equal to a second voltage threshold, the electrical transmission direction of the bidirectional transformer circuit 2 is switched to be from the first electrical transmission interface 21 to the second electrical transmission interface 22. The first voltage threshold is greater than the second voltage threshold. The second voltage threshold may be the working voltage of the target equipment.

During implementation, when the motor of the target equipment is in the electricity-consuming working state, the electrical transmission direction of the bidirectional transformer circuit 2 is from the first electrical transmission interface 21 to the second electrical transmission interface 22, and the voltage value at the second electrical transmission interface 22 is the normal working voltage of the target equipment. If the motor of the target equipment is switched from the electricity-consuming working state to the electricity-generating working state, since the electrical transmission direction of the bidirectional transformer circuit 2 cannot be changed instantaneously, at the moment when the motor is just switched to the electricity-generating working state, the electrical transmission direction of the bidirectional transformer circuit 2 is still from the first electrical transmission interface 21 to the second electrical transmission interface 22, and the voltage value at the second electrical transmission interface 22 is the working voltage of the target equipment. However, when the motor is in the electricity-generating working state, the electrical energy generated by the motor is transmitted to the second electrical transmission interface 22 through the voltage bus, resulting in an increase in the voltage at the second electrical transmission interface 22 (i.e., the voltage at the connection between the second electrical transmission interface 22 and the voltage bus). Therefore, when the motor of the target equipment is in the electricity-consuming working state, the control circuit 3 may periodically detect the voltage value at the second electrical transmission interface 22. If it is detected that the voltage value at the second electrical transmission interface 22 is greater than or equal to the first voltage threshold (the first voltage threshold is greater than the working voltage of the target motor), it means that the motor of the target equipment has already been in the electricity-generating working state, and therefore the electrical transmission direction of the bidirectional transformer circuit 2 can be switched to be from the second electrical transmission interface 22 to the first electrical transmission interface 21, to transmit the electrical energy generated by the motor of the target equipment back to the power grid. Meanwhile, the control circuit 3 may change the motor from the electricity-consuming working state to the electricity-generating working state.

When the motor of the target equipment is in the electricity-generating working state, the electrical transmission direction of the bidirectional transformer circuit 2 is from the second electrical transmission interface 22 to the first electrical transmission interface 21, and since the voltage at the second electrical transmission interface 22 rises due to the transmission of electrical energy outwardly by the target equipment, the voltage at the second electrical transmission interface 22 is greater than the normal working voltage of the target equipment at this time. If the motor of the target equipment stops generating electricity outwardly, the voltage at the second electrical transmission interface 22 will gradually decrease. Therefore, when the motor of the target equipment is in the electricity-generating working state, the control circuit 3 may periodically detect the voltage value at the second electrical transmission interface 22. If it is detected that the voltage value at the second electrical transmission interface 22 is less than or equal to the second voltage threshold (the second voltage threshold is less than the first voltage threshold), it means that the motor of the target equipment has stopped generating electricity, and therefore the electrical transmission direction of the bidirectional transformer circuit 2 can be switched to be from the first electrical transmission interface 21 to the second electrical transmission interface 22. Thereafter, power can be supplied to the motor of the target equipment through the second electrical transmission interface 22. Meanwhile, the control circuit 3 can change the motor from the electricity-consuming working state to the electricity-consuming working state.

The first voltage threshold and the second voltage threshold may be set by the technician according to the working voltage of the target equipment. The second voltage threshold is greater than the first voltage threshold, and the first voltage threshold may be the normal working voltage of the target equipment. Here, by setting two voltage thresholds, the switching of the electrical transmission direction of the bidirectional transformer circuit 2 due to the voltage jitter at the second electrical transmission interface 22 can be avoided. For example, the working voltage of the target equipment and the first voltage threshold are 48 V, and the second voltage threshold is 52 V When the motor of the target equipment is in the electricity-consuming working state, the voltage at the second electrical transmission interface 22 may jitter around 48 V In this way, even if the voltage at the second electrical transmission interface 22 jitters to 50 V, the electrical transmission direction of the bidirectional transformer circuit 2 is not switched, and normal operation of the motor can be ensured.

In a possible implementation, when the control circuit 3 determines the working state of the motor and controls the electrical transmission direction of the bidirectional transformer circuit 2 based on the direction of current at the connection between the bidirectional transformer circuit 2 and the voltage bus of the target equipment, further processing is as follows.

In the case that the electrical transmission direction of the bidirectional transformer circuit 2 is from the first electrical transmission interface 21 to the second electrical transmission interface 22, if the direction of current at the second electrical transmission interface 22 is opposite to the preset direction of current, then the electrical transmission direction is switched to be from the second electrical transmission interface 22 to the first electrical transmission interface 21. In the case that the electrical transmission direction of the bidirectional transformer circuit 2 is from the second electrical transmission interface 22 to the first electrical transmission interface 21, if the direction of current at the second electrical transmission interface 22 is the same as the preset direction of current, the electrical transmission direction is switched to be from the first electrical transmission interface 21 to the second electrical transmission interface 22.

The preset direction of current may be the direction of current at the second electrical transmission interface 22 when the target equipment is in the electricity-consuming working state.

During implementation, when the motor of the target equipment is in the electricity-consuming working state, the electrical transmission direction of the bidirectional transformer circuit 2 is from the first electrical transmission interface 21 to the second electrical transmission interface 2, the bidirectional power supply supplies power to the target equipment through the second electrical transmission interface 22, and the direction of current at the second electrical transmission interface 22 is the same as the preset direction of current. If the motor of the target equipment is switched from the electricity-consuming working state to the electricity-generating working state, the direct current generated by the motor of the target equipment may be transmitted to the second electrical transmission interface 22 through the voltage bus of the target equipment and the energy storage device (e.g., capacitor) in the bidirectional transformer circuit 2 is charged through the second electrical transmission interface 22. As a result, the direction of current at the second electrical transmission interface 22 at this time is opposite to the direction of current at the motor of the target equipment in the electricity-consuming working state. Therefore, when the motor of the target equipment is in the electricity-consuming working state, the control circuit 3 may periodically detect the direction of current at the second electrical transmission interface 22. If it is detected that the direction of current at the second electrical transmission interface 22 is opposite to the preset direction of current, it means that the motor of the target equipment has already been in the electricity-generating operating state, and therefore the electrical transmission direction of the bidirectional transformer circuit 2 can be switched to be from the second electrical transmission interface 22 to the first electrical transmission interface 21, to transmit the electrical energy generated by the motor of the target equipment back to the power grid. Meanwhile, the control circuit 3 can change the motor from the electricity-consuming working state to the electricity-generating working state. It should be noted that the electricity-consuming working state of the motor may include a powered-on and rotating state of the motor and may also include a standby state of the motor.

When the target equipment is in the electricity-generating working state, the electrical transmission direction of the bidirectional transformer circuit 2 is from the second electrical transmission interface 22 to the first electrical transmission interface 21, and the direction of current at the second electrical transmission interface 22 is opposite to the preset direction of current due to the outwardly output current from the target equipment. If the motor of the target equipment is switched from the electricity-generating working state to the electricity-consuming working state, although the electrical transmission direction of the bidirectional transformer circuit 2 cannot change instantaneously, the electrical energy stored in the energy storage device (e.g., capacitor) included in the bidirectional transformer circuit 2 is transmitted to the target equipment, and thus the direction of current at the second electrical transmission interface 22 at this time is the same as the preset direction of current. Therefore, when the motor of the target equipment is in the electricity-generating working state, the control circuit 3 can periodically detect the direction of current at the second electrical transmission interface 22. If the control circuit 3 detects that the direction of current at the second electrical transmission interface 22 is the same as the preset direction of current, it means that the motor of the target equipment has stopped generating electricity, and the electrical transmission direction of the bidirectional transformer circuit 2 can be switched to be from the first electrical transmission interface 21 to the second electrical transmission interface 22. Afterwards, power can be supplied to the target equipment through the second electrical transmission interface 22. Meanwhile, the control circuit 3 can change the motor from the electricity-generating working state to the electricity-consuming working state.

In a possible implementation, the control circuit 3 includes a detector 31 and a processor 32. The detector 31 is configured to detect an electrical parameter at the connection between the bidirectional transformer circuit 2 and the voltage bus of the target equipment, and the processor 32 is configured to acquire the electrical parameter detected by the detector 31, and to control the electrical transmission direction of the bidirectional transformer circuit 2 based on the electrical parameter.

As shown in FIG. 2, the control circuit 3 includes the detector 31 and the processor 32.

The detector 31 is configured to detect a voltage value, or a current value, or the like in the circuit. The direction of current can be indicated by the positive or negative of the current value. For example, the detector 31 may be a voltage detector or a current detector, or may also be a detector including a voltage detection component and a current detection component, and the like. The detector 31 may establish a connection with the bidirectional transformer circuit 2 according to the detection function, so as to detect the voltage value or current direction at the connection between the bidirectional transformer circuit 2 and the voltage bus of the target equipment. A connection may be established between the detector 31 and the processor 32, and the detector 31 may send the detected voltage value, current value, or current direction to the processor 32.

The processor 32 may be any processing chip. The processor 32 may determine the working state of the target equipment based on the voltage value, current direction, or the like sent by the detector 31, and control the electrical transmission direction of the bidirectional transformer circuit 2 based on the working state of the target equipment. That is, when it is determined that the motor of the target equipment is in the electricity-consuming working state, the electrical transmission direction of the bidirectional transformer circuit 2 may be set to be from the first electrical transmission interface 21 to the second electrical transmission interface 22, thereby supplying power to the target equipment. When it is determined that the motor of the target equipment is in the electricity-generating working state, the electrical transmission direction of the bidirectional transformer circuit 2 may be set to be from the second electrical transmission interface 22 to the first electrical transmission interface 21, thereby transmitting the current generated by the motor into the power grid in the reverse direction.

In a possible implementation, the bidirectional AC/DC converter circuit 1 is a bidirectional power factor correction (PFC) circuit, and the bidirectional transformer circuit 2 is a bidirectional dual active bridge (DAB) circuit.

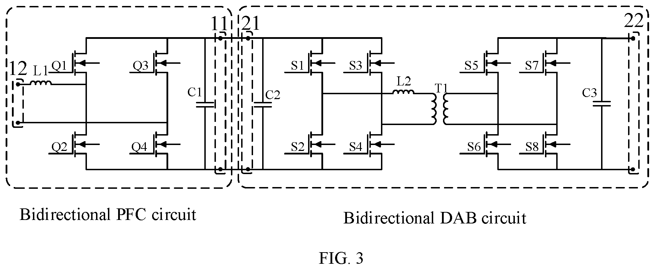

As shown in FIG. 3, the bidirectional AC/DC converter circuit 1 is a bidirectional PFC circuit. The bidirectional PFC circuit consists of one H-bridge, one inductor L1, and one capacitor C1. The H-bridge includes four independently-controlled switching devices Q1-Q4. The AC interface 12 of the bidirectional PFC circuit may be accessed to a power grid, and the DC interface 11 of the bidirectional PFC circuit is connected to the first electrical transmission interface 21 of the bidirectional DAB circuit. The switching device may be a metal-oxide-semiconductor field-effect transistor (MOSFET) tube, and the switching devices Q1-Q4 may be considered as the control terminals 13 of the bidirectional PFC circuit. The control circuit 3 may, by controlling the ON and OFF of the switching devices Q1-Q4, convert the alternating current flowing from the AC interface 12 to the direct current and output the direct current through the DC interface 11, or convert the direct current flowing from the DC interface 11 to the alternating current and output the alternating current through the AC interface 12.

The bidirectional transformer circuit 2 is a bidirectional DAB circuit. The bidirectional DAB circuit consists of two H-bridges, a capacitor C2, a capacitor C3, a transformer T1, and an inductor L2. The two H-bridges are electrically isolated by the transformer T1. The two H-bridges include eight switching devices S1-S8, and the inductor L2 may be on the middle bridge arm of either H-bridge. The eight switching devices S 1-S8 may be considered as the control terminals 23 of the bidirectional DAB circuit, and the control circuit 3 may, by controlling the ON and OFF of the switching devices S1-S8, control the electrical transmission direction of the bidirectional DAB circuit. For example, when it is necessary to control the electrical transmission direction of the bidirectional DAB circuit to be from the first electrical transmission interface 21 to the second electrical transmission interface 22, a switching device in the first H-bridge proximal to the first electrical transmission interface 21 may be controlled to be switched on first to transmit the incoming direct current from the first electrical transmission interface 21 to the transformer T1, and then a switching device in the second H-bridge proximal to the second electrical transmission interface 22 is controlled to be switched on, thereby transmitting the direct current in the first H-bridge to the second H-bridge through the transformer. Similarly, when it is necessary to control the electrical transmission direction of the bidirectional DAB circuit to be from the second electrical transmission interface 22 to the first electrical transmission interface 21, a switching device in the second H-bridge may be controlled to be switched on first to transmit the incoming direct current from the second electrical transmission interface 22 to the transformer T1, and then a switching device in the first H-bridge is controlled to be switched on, thereby transmitting the direct current in the second H-bridge to the first H-bridge through the transformer. The method of controlling different switching devices in the first H-bridge and the second H-bridge by the control circuit 3 belongs to the prior art and will not be described in detail herein.

The first electrical transmission interface 21 of the bidirectional DAB circuit is connected to the DC interface of the bidirectional PFC circuit, and the second electrical transmission interface 22 of the bidirectional DAB circuit is connected to the voltage bus of the target equipment.

When the motor of the target equipment is in the electricity-consuming working state, the electrical transmission direction of the bidirectional DAB circuit is from the first electrical transmission interface 21 to the second electrical transmission interface 22, and the voltage at two ends of the capacitor C3, i.e., the voltage of the second electrical transmission interface 22, is the normal working voltage of the target equipment, for example, 48 V If the target equipment is switched to the electricity-generating working state, the motor of the target equipment transmits the current through the voltage bus to the second electrical transmission interface 22, causing the voltage at two ends of the second electrical transmission interface 22 to increase, and causing the direction of current at the second electrical transmission interface 22 to be opposite to the preset direction of current. In this case, the control mode over the switching devices S1-S8 can be changed by the control circuit 3, to change the electrical transmission direction of the bidirectional DAB circuit to be from the second electrical transmission interface 22 to the first electrical transmission interface 21. In this way, the direct current generated by the motor of the target equipment can be transmitted to the bidirectional DAB circuit, and the incoming direct current can be boosted by the bidirectional DAB circuit and is transmitted to the bidirectional PFC circuit, and then the bidirectional PFC circuit converts the incoming direct current to the alternating current and transmits the alternating current to the power grid.

When the motor of the target equipment is in the electricity-generating working state, the electrical transmission direction of the bidirectional DAB circuit is from the second electrical transmission interface 22 to the first electrical transmission interface 21, and the voltage at two ends of the capacitor C3 is greater than the normal working voltage of the target equipment, that is, the voltage of the second electrical transmission interface 22 is greater than the normal working voltage of the target equipment, for example, 52 V If the target equipment is switched to the electricity-consuming working state, the voltage at two ends of the capacitor C3 will return to the working voltage of the target equipment and the direction of current at the second electrical transmission interface 22 is caused to be the same as the preset direction of current. In this case, the control mode over the switching devices S1-S8 can be changed by the control circuit 3, to change the electrical transmission direction of the bidirectional DAB circuit to be from the first electrical transmission interface 21 to the second electrical transmission interface 22. In this way, when the motor of the target equipment needs to be powered to be driven, the bidirectional PFC circuit can convert the alternating current in the power grid into direct current and transmit the direct current to the bidirectional DAB circuit. The bidirectional DAB circuit can step down the incoming direct current from the bidirectional PFC circuit to the normal working voltage of the target equipment, thereby driving the motor of the target equipment to rotate.

It can be seen that the bidirectional power supply provided in the present application can transmit the electrical energy generated by the motor into the AC source when the motor of the target equipment is in the electricity-generating working state, and can supply power to the motor when the motor of the target equipment is in the electricity-consuming working state. Furthermore, the working state of the motor of the target equipment can be automatically identified, and the electrical transmission direction of the bidirectional power supply can be automatically switched based on the working state, which can cope with the frequent switching of the working state of the motor. In this way, there is no need to configure a discharge resistor and a cooling fan, or the like for the target equipment, which can reduce the production cost of the target equipment, reduce the volume of the target equipment, and further improve the utilization rate of energy.

The present application further provides a method for controlling a bidirectional power supply. The bidirectional power supply includes a bidirectional AC/DC converter circuit 1, a bidirectional transformer circuit 2, and a control circuit 3. The bidirectional AC/DC converter circuit 1 is connected to an AC source and the bidirectional transformer circuit 2; the bidirectional transformer circuit 2 is connected to a voltage bus of target equipment; and the control circuit 3 is connected to the bidirectional transformer circuit 2. The method for controlling the bidirectional power supply includes: acquiring, by the control circuit 3, an electrical parameter at the connection between the bidirectional transformer circuit 2 and the voltage bus, and controlling, by the control circuit 3, an electrical transmission direction of the bidirectional transformer circuit 2 based on the electrical parameter.

In a possible implementation, the electrical parameter may be a voltage value, and the controlling the electrical transmission direction of the bidirectional transformer circuit 2 based on the electrical parameter includes:

in the case that the electrical transmission direction of the bidirectional transformer circuit 2 is from the first electrical transmission interface 21 to the second electrical transmission interface 22, switching, if the control circuit 3 determines that a voltage value at the second electrical transmission interface 22 is greater than or equal to a first voltage threshold, the electrical transmission direction of the bidirectional transformer circuit 2 to be from the second electrical transmission interface 22 to the first electrical transmission interface 21, wherein the first electrical transmission interface 21 is an interface of the bidirectional transformer circuit 2 that is connected to the bidirectional AC/DC converter circuit 1, and the second electrical transmission interface 22 is an interface of the bidirectional transformer circuit 2 that is connected to the voltage bus of the target equipment; and

in the case that the electrical transmission direction of the bidirectional transformer circuit 2 is from the second electrical transmission interface 22 to the first electrical transmission interface 21, switching, if the control circuit 3 determines that the voltage value at the second electrical transmission interface 22 is less than or equal to a second voltage threshold, the electrical transmission direction of the bidirectional transformer circuit 2 to be from the first electrical transmission interface 21 to the second electrical transmission interface 22, wherein the first voltage threshold is greater than the second voltage threshold.

In a possible implementation, the second voltage threshold is the normal working voltage of the target equipment.

In a possible implementation, the electrical parameter may be a direction of current, and the controlling the electrical transmission direction of the bidirectional transformer circuit 2 based on the electrical parameter includes:

in the case that the electrical transmission direction of the bidirectional transformer circuit 2 is from the first electrical transmission interface 21 to the second electrical transmission interface 22, switching, if the control circuit 3 determines that a direction of current at the second electrical transmission interface 22 is opposite to a preset direction of current, the electrical transmission direction to be from the second electrical transmission interface 22 to the first electrical transmission interface 21, wherein the first electrical transmission interface 21 is an interface of the bidirectional transformer circuit 2 that is connected to the bidirectional AC/DC converter circuit 1, and the second electrical transmission interface 22 is an interface of the bidirectional transformer circuit 2 that is connected to the voltage bus of the target equipment; and

in the case that the electrical transmission direction of the bidirectional transformer circuit 2 is from the second electrical transmission interface 22 to the first electrical transmission interface 21, switching, if the control circuit 3 determines that the direction of current at the second electrical transmission interface 22 is the same as the preset direction of current, the electrical transmission direction to be from the first electrical transmission interface 21 to the second electrical transmission interface 22.

In a possible implementation, the control circuit 3 includes a detector 31 and a processor 32; wherein the acquiring the electrical parameter at the connection between the bidirectional transformer circuit 2 and the voltage bus includes:

detecting, by the detector 31, the electrical parameter at the connection between the bidirectional transformer circuit 2 and the voltage bus;

and the controlling the electrical transmission direction of the bidirectional transformer circuit 2 based on the electrical parameter includes:

acquiring, by the processor 32, the electrical parameter detected by the detector 31, and controlling, by the processor 32, the electrical transmission direction of the bidirectional transformer circuit 2 based on the electrical parameter.

In the embodiments of the present application, the bidirectional power supply includes a bidirectional AC/DC converter circuit, a bidirectional transformer circuit, and a control circuit. The control circuit can control the electrical transmission direction of the bidirectional transformer circuit based on the electrical parameter at the connection between the bidirectional transformer circuit and the voltage bus of the target equipment. Since the electrical parameter at the connection is directly related to the working state of the motor of the target equipment, by detecting the electrical parameter to control the electric transmission direction of the bidirectional transformer circuit, when the motor of the target equipment is in the electricity-generating working state, the direct current generated by the motor can be transmitted through the bidirectional transformer circuit to the bidirectional AC/DC converter circuit, and then the bidirectional AC/DC converter circuit converts the incoming direct current into an alternating current to be transmitted to the AC source. In this way, in the present application, there is no need to configure a discharge resistor and a cooling fan, or the like for the target equipment, which can reduce the production cost, volume, and the like of the target equipment.

The method for controlling the bidirectional power supply in the embodiments shares the same concept with the above embodiments corresponding to the bidirectional power supply, and for the specific implementation process, please refer to the embodiments corresponding to the bidirectional power supply, and details are not repeated herein.

In the present application, the terms "first", "second", and the like are used for distinguishing the same or similar items having basically the same effects and functions. It should be understood that there is no logical or temporal dependency between "first" and "second", and that "first" and "second" are not intended to limit the number and order of execution. The term "a plurality of" refers to two or more in the present application.

Described above are merely specific embodiments of the present application, and are not intended to limit the present application. Within the spirit and principles of the application, any modifications, equivalent substitutions, improvements, and the like are within the protection scope of the present application.

## Claims

1. A bidirectional power supply, comprising a bidirectional AC/DC converter circuit (1), a bidirectional transformer circuit (2), and a control circuit (3), wherein:
the bidirectional AC/DC converter circuit (1) is connected to an AC source and the bidirectional transformer circuit (2);
the bidirectional transformer circuit (2) is connected to a voltage bus of target equipment; and
the control circuit (3) is connected to the bidirectional transformer circuit (2), and is configured to acquire an electrical parameter at a connection between the bidirectional transformer circuit (2) and the voltage bus, and control an electrical transmission direction of the bidirectional transformer circuit (2) based on the electrical parameter.

2. The bidirectional power supply according to claim 1, wherein the electrical parameter is a voltage value; and
the control circuit (3) is configured to:
in a case that the electrical transmission direction of the bidirectional transformer circuit (2) is from a first electrical transmission interface (21) to a second electrical transmission interface (22), switch, if a voltage value at the second electrical transmission interface (22) is greater than or equal to a first voltage threshold, the electrical transmission direction of the bidirectional transformer circuit (2) to be from the second electrical transmission interface (22) to the first electrical transmission interface (21), wherein the first electrical transmission interface (21) is an interface of the bidirectional transformer circuit (2) that is connected to the bidirectional AC/DC converter circuit (1), and the second electrical transmission interface (22) is an interface of the bidirectional transformer circuit (2) that is connected to the voltage bus of the target equipment; and
in a case that the electrical transmission direction of the bidirectional transformer circuit (2) is from the second electrical transmission interface (22) to the first electrical transmission interface (21), switch, if the voltage value at the second electrical transmission interface (22) is less than or equal to a second voltage threshold, the electrical transmission direction of the bidirectional transformer circuit (2) to be from the first electrical transmission interface (21) to the second electrical transmission interface (22), wherein the first voltage threshold is greater than the second voltage threshold.

3. The bidirectional power supply according to claim 2, wherein the second voltage threshold is a working voltage of the target equipment.

4. The bidirectional power supply according to claim 1, wherein the electrical parameter is a direction of current; and
the control circuit (3) is configured to:
in a case that the electrical transmission direction of the bidirectional transformer circuit (2) is from a first electrical transmission interface (21) to a second electrical transmission interface (22), switch, if a direction of current at the second electrical transmission interface (22) is opposite to a preset direction of current, the electrical transmission direction to be from the second electrical transmission interface (22) to the first electrical transmission interface (21), wherein the first electrical transmission interface (21) is an interface of the bidirectional transformer circuit (2) that is connected to the bidirectional AC/DC converter circuit (1), and the second electrical transmission interface (22) is an interface of the bidirectional transformer circuit (2) that is connected to the voltage bus of the target equipment; and
in a case that the electrical transmission direction of the bidirectional transformer circuit (2) is from the second electrical transmission interface (22) to the first electrical transmission interface (21), switch, if the direction of current at the second electrical transmission interface (22) is the same as the preset direction of current, the electrical transmission direction to be from the first electrical transmission interface (21) to the second electrical transmission interface (22).

5. The bidirectional power supply according to claim 1, wherein:
the control circuit (3) comprises a detector (31) and a processor (32);
the detector (31) is configured to detect the electrical parameter at the connection between the bidirectional transformer circuit (2) and the voltage bus; and
the processor (32) is configured to acquire the electrical parameter detected by the detector (31) and control the electrical transmission direction of the bidirectional transformer circuit (2) based on the electrical parameter.

6. The bidirectional power supply according to any one of claims 1 to 5, wherein the target equipment is configured with a mechanical arm driven by a motor.

7. The bidirectional power supply according to any one of claims 1 to 5, wherein the bidirectional AC/DC converter circuit (1) is a bidirectional power factor correction, , circuit.

8. The bidirectional power supply according to any one of claims 1 to 5, wherein the bidirectional transformer circuit (2) is a bidirectional dual active bridge, , circuit.

9. A method for controlling a bidirectional power supply, wherein:
the bidirectional power supply comprises a bidirectional AC/DC converter circuit (1), a bidirectional transformer circuit (2), and a control circuit (3);
the bidirectional AC/DC converter circuit (1) is connected to an AC source and the bidirectional transformer circuit (2);
the bidirectional transformer circuit (2) is connected to a voltage bus of target equipment;
the control circuit (3) is connected to the bidirectional transformer circuit (2); and
the method comprises: acquiring, by the control circuit (3) an electrical parameter at a connection between the bidirectional transformer circuit (2) and the voltage bus, and controlling by the control circuit (3), an electrical transmission direction of the bidirectional transformer circuit (2) based on the electrical parameter.

10. The method according to claim 9, wherein the electrical parameter is a voltage value; and
the controlling the electrical transmission direction of the bidirectional transformer circuit (2) based on the electrical parameter comprises:
in a case that the electrical transmission direction of the bidirectional transformer circuit (2) is from a first electrical transmission interface (21) to a second electrical transmission interface (22), switching, if the control circuit (3) determines that a voltage value at the second electrical transmission interface (22) is greater than or equal to a first voltage threshold, the electrical transmission direction of the bidirectional transformer circuit (2) to be from the second electrical transmission interface (22) to the first electrical transmission interface (21), wherein the first electrical transmission interface (21) is an interface of the bidirectional transformer circuit (2) that is connected to the bidirectional AC/DC converter circuit (1), and the second electrical transmission interface (22) is an interface of the bidirectional transformer circuit (2) that is connected to the voltage bus of the target equipment; and
in a case that the electrical transmission direction of the bidirectional transformer circuit (2) is from the second electrical transmission interface (22) to the first electrical transmission interface (21), switching, if the control circuit (3) determines that the voltage value at the second electrical transmission interface (22) is less than or equal to a second voltage threshold, the electrical transmission direction of the bidirectional transformer circuit (2) to be from the first electrical transmission interface (21) to the second electrical transmission interface (22), wherein the first voltage threshold is greater than the second voltage threshold.

11. The method according to claim 10, wherein the second voltage threshold is a working voltage of the target equipment.

12. The method according to claim 9, wherein the electrical parameter is a direction of current; and
the controlling the electrical transmission direction of the bidirectional transformer circuit (2) based on the electrical parameter comprises:
in a case that the electrical transmission direction of the bidirectional transformer circuit (2) is from a first electrical transmission interface (21) to a second electrical transmission interface (22), switching, if the control circuit (3) determines that a direction of current at the second electrical transmission interface (22) is opposite to a preset direction of current, the electrical transmission direction to be from the second electrical transmission interface (22) to the first electrical transmission interface (21), wherein the first electrical transmission interface (21) is an interface of the bidirectional transformer circuit (2) that is connected to the bidirectional AC/DC converter circuit (1), and the second electrical transmission interface (22) is an interface of the bidirectional transformer circuit (2) that is connected to the voltage bus of the target equipment; and
in a case that the electrical transmission direction of the bidirectional transformer circuit (2) is from the second electrical transmission interface (22) to the first electrical transmission interface (21), switching, if the control circuit (3) determines that the direction of current at the second electrical transmission interface (22) is the same as the preset direction of current, the electrical transmission direction to be from the first electrical transmission interface (21) to the second electrical transmission interface (22).

13. The method according to claim 9, wherein:
the control circuit (3) comprises a detector (31) and a processor (32); and
the acquiring the electrical parameter at the connection between the bidirectional transformer circuit (2) and the voltage bus comprises:
detecting, by the detector (31), the electrical parameter at the connection between the bidirectional transformer circuit (2) and the voltage bus; and
the controlling the electrical transmission direction of the bidirectional transformer circuit (2) based on the electrical parameter comprises:
acquiring, by the processor (32), the electrical parameter detected by the detector (31) and controlling, by the processor (32), the electrical transmission direction of the bidirectional transformer circuit (2) based on the electrical parameter.
